# EUROPEAN PATENT APPLICATION

(11) **EP 4 825 829 A1**
(43) Date of publication of application: **21.10.2026**
(21) Application number: 24903389.5
(22) Date of filing: 07.11.2024
(51) Int. Cl.: C04B 35/495, H01G 4/30

(54) **DIELECTRIC COMPOSITION, DIELECTRIC ELEMENT, AND MULTILAYER ELECTRONIC COMPONENT**

(30) Priority: 12.12.2023 JP 2023208918
(71) Applicant: Niterra Co., Ltd., Nagoya-shi, Aichi 461-0005 (JP)
(72) Inventor: KIMURA Koya, Nagoya-shi, Aichi 461-0005 (JP); HIROSE Yoshinobu, Nagoya-shi, Aichi 461-0005 (JP); KOZUKA Hisashi, Nagoya-shi, Aichi 461-0005 (JP)
(74) Representative: Grünecker Patent- und Rechtsanwälte PartG mbB
(86) International application number: PCT/JP2024/039636
(87) International publication number: WO 2025/126729

(57) **Abstract**

A dielectric composition of the present invention is a dielectric composition including a crystal phase which includes an Sr₂NaNb₅O₁₅-based oxide having a tungsten bronze-type structure. The Sr₂NaNb₅O₁₅-based oxide has a crystal structure characterized in that, in a synchrotron XRD pattern obtained through analysis of the Sr₂NaNb₅O₁₅-based oxide by synchrotron XRD at a measurement wavelength of 0.85 angstroms, a peak top of the synchrotron XRD pattern appears in a range of diffraction angle 2θ of 10.7° to 11.0°, and a peak intensity ratio is 0.0043 or more. The peak intensity ratio is the ratio of an intensity of a peak having the peak top to an intensity of a maximum peak having the maximum intensity among peaks in the synchrotron XRD pattern attributable to the Sr₂NaNb₅O₁₅-based oxide.

## Description

### TECHNICAL FIELD

The present invention relates to a dielectric composition, a dielectric element, and a multilayer electronic component.

### BACKGROUND ART

A dielectric capacitor (for example, a laminated ceramic capacitor) is a capacitor including a dielectric layer formed of a dielectric composition and is used as a major component in various electronic apparatuses such as home appliances, automobile control equipment, etc. Among such dielectric capacitors, for example, those used in powertrains of electric vehicles are required to have high withstand voltages (so that they do not break down under application of high voltage) and maintain their high relative permittivities in high electric fields, because higher voltages (e.g., 400 V to 800 V) are applied thereto due to the increased voltages of the batteries of the electric vehicles. In addition, dielectric capacitors of such a type are required to have large capacitances (i.e., to increase their capacitances) in addition to high withstand voltages and high relative permittivities in high electric fields.

Notably, as shown in Patent Document 1, in order to enable a dielectric capacitor to have a large capacitance in an environment in which a high voltage is applied, it is required that a change (the amount of decrease) in relative permittivity upon application of a DC volage is small.

Although a dielectric composition containing BaTiO₃ which has high permittivity has been conventionally used for dielectric capacitors, the relative permittivity of the dielectric composition containing BaTiO₃ in a high electric field is significantly low. Therefore, there has been proposed to use, for a dielectric capacitor, for example, a dielectric composition having a tungsten bronze-type structure as shown in Patent Document 1.

### PRIOR ART DOCUMENT

### PATENT DOCUMENT

Patent Document 1: WO2017/163845

### SUMMARY OF THE INVENTION

### PROBLEM TO BE SOLVED BY THE INVENTION

In the case of the conventional dielectric composition having a tungsten bronze-type structure, although the above-described change (the amount of decrease) in the relative permittivity is small, the relative permittivity in a high electric field cannot be said to be sufficiently high, which has been a problem.

An object of the present invention is to provide a dielectric composition, etc. in which the amount of decrease in relative permittivity upon application of a DC high voltage is small and the relative permittivity in a high electric field is high.

### MEANS FOR SOLVING THE PROBLEM

Means for solving the above-described problem are as follows.
<1> A dielectric composition including a crystal phase including an Sr₂NaNb₅O₁₅-based oxide having a tungsten bronze-type structure, in which the Sr₂NaNb₅O₁₅-based oxide has a crystal structure characterized in that, in a synchrotron XRD pattern obtained through analysis of the Sr₂NaNb₅O₁₅-based oxide by synchrotron XRD at a measurement wavelength of 0.85 angstroms, a peak top of the synchrotron XRD pattern appears in a range of diffraction angle 2θ of 10.7° to 11.0°, and a peak intensity ratio is 0.0043 or more, the peak intensity ratio being the ratio of an intensity of a peak having the peak top to an intensity of a maximum peak having the maximum intensity among peaks in the synchrotron XRD pattern attributable to the Sr₂NaNb₅O₁₅-based oxide.
<2> The dielectric composition recited in the above paragraph <1>, in which the Sr₂NaNb₅O₁₅-based oxide contains Ca, Y, and Zr.
<3> A dielectric element comprising:
   a dielectric ceramic formed of the dielectric composition recited in the above paragraph <1> or <2>; and electrodes attached to the dielectric ceramic.
<4> A multilayer electronic component comprising a multilayer body in which dielectric layers formed of the dielectric composition recited in the above paragraph <1> or <2> and internal electrode layers are alternatingly stacked.

### EFFECT OF THE INVENTION

According to the present invention, it is possible to provide a dielectric composition, etc. in which the amount of decrease in relative permittivity upon application of a DC high voltage is small and the relative permittivity in a high electric field is high.

### BRIEF DESCRIPTION OF THE DRAWINGS

[FIG. 1] FIG. 1 is a perspective view of a dielectric element.
[FIG. 2] FIG. 2 is a sectional view of a multilayer electronic component.
[FIG. 3] FIG. 3 is a chart showing a synchrotron XRD pattern in a range of diffraction angle 2θ of 10° to 20° for measurement samples of Examples 1 to 4 and Comparative Examples 1 to 4.
[FIG. 4] FIG. 4 is a chart showing synchrotron XRD pattern in a range of diffraction angle 2θ of 9° to 12° for the measurement samples of Examples 1 to 4 and Comparative Examples 1 to 4.

### MODES FOR CARRYING OUT THE INVENTION

A dielectric composition, a dielectric element, and a multilayer electronic component according to an embodiment will now be described.

The dielectric composition includes a crystal phase including an Sr₂NaNb₅O₁₅-based oxide having a tungsten bronze-type structure. In the present specification, the "Sr₂NaNb₅O₁₅-based oxide having a tungsten bronze-type structure" refers to an Sr₂NaNb₅O₁₅-based oxide having a tungsten bronze-type structure in which a small amount of a particular element is incorporated into the A and B sites of Sr₂NaNb₅O₁₅ having a tungsten bronze-type structure. Although no particular limitation is imposed on the particular element, as long as the object of the present invention is not impaired, examples of the particular element include Ca, Y, and Zr.

As long as the object of the present invention is not impaired, the dielectric composition may include the crystal phase of the Sr₂NaNb₅O₁₅-based oxide as a main phase or a secondary phase. Notably, the main phase of the crystal phase is a crystal phase corresponding to a peak pattern which accounts for the largest part of a synchrotron XRD pattern which will be described later. The secondary phase of the crystal phase is a crystal phase corresponding to a peak pattern other than that of the main phase in the synchrotron XRD pattern. A method for measuring the synchrotron XRD pattern will be described later.

When a synchrotron XRD pattern is obtained through analysis of the Sr₂NaNb₅O₁₅-based oxide by synchrotron XRD at a measurement wavelength of 0.85 angstroms, a peak top of the synchrotron XRD pattern appears in a range of diffraction angle 20 of 10.7° to 11.0°. The diffraction peak corresponding to the peak top has a maximum value in the range of 10.7 ≤ 28(°) ≤ 11.0 and has a half-width greater than 0.02°. Notably, the diffraction peak in the range of 10.7 ≤ 2θ(°) ≤ 11.0 at the measurement wavelength of 0.85 angstroms corresponds to a lattice spacing of 4.43 angstroms to 4.56 angstroms.

It is known that, in general, Sr₂NaNb₅O₁₅ having a tetragonal tungsten bronze-type structure has a structure in which NbO₆ octahedrons are connected in straight in the c-axis direction. In contrast, supposedly, the dielectric composition of the present embodiment has a crystal structure in which the octahedral structure tilts in relation to the c-axis direction.

It is supposed that, as a result of incorporation of a small amount of a particular element (e.g., Ca, Y, Zr) into the A and B sites of Sr₂NaNb₅O₁₅ having a tungsten bronze-type structure, tilting of the octahedral structure was induced, and thus, a diffraction peak (peak top) appeared in the range of diffraction angle 2θ of 10.7° to 11.0° as described later.

In addition, the dielectric composition has a crystal structure having a peak intensity ratio of 0.0043 or more. The peak intensity ratio is the ratio of the intensity of a peak having the above-mentioned peak top to the intensity of a maximum peak having the maximum intensity among peaks in the synchrotron XRD pattern attributable to the Sr₂NaNb₅O₁₅-based oxide. The maximum peak is selected from diffraction peaks in the synchrotron XRD pattern attributable to the tungsten bronze-type structure.

Notably, the dielectric composition of the present embodiment may include a crystal phase having a perovskite-type crystal structure and other crystal phases, as long as the object of the present invention is not impaired.

In addition, the dielectric composition of the present embodiment may contain unavoidable impurities at a level of 1000 ppm or less.

Examples of raw materials used for production of the dielectric composition include a Sr-containing compound which contains strontium, a Na-containing compound which contains sodium, a Nb-containing compound which contains niobium, a Ca-containing compound which contains calcium, an Y-containing compound which contains yttrium, and a Zr-containing compound which contains zirconium.

Examples of the Sr-containing compound include powders of various inorganic compounds such as oxides of Sr, complex oxides of Sr, hydroxide of Sr, carbonate of Sr, chloride of Sr, sulphate of Sr, nitrate of Sr, and phosphate of Sr. A specific example is powder of strontium carbonate.

Examples of the Na-containing compound include powders of various inorganic compounds such as oxides of Na, complex oxides of Na, hydroxide of Na, carbonate of Na, chloride of Na, sulphate of Na, nitrate of Na, and phosphate of Na. A specific example is powder of sodium carbonate.

Examples of the Nb-containing compound include powders of various inorganic compounds such as oxides of Nb, complex oxides of Nb, hydroxide of Nb, carbonate of Nb, chloride of Nb, sulphate of Nb, nitrate of Nb, and phosphate of Nb. A specific example is powder of niobium oxide.

Examples of the Ca-containing compound include powders of various inorganic compounds such as oxides of Ca, complex oxides of Ca, hydroxide of Ca, carbonate of Ca, chloride of Ca, sulphate of Ca, nitrate of Ca, and phosphate of Ca. A specific example is powder of calcium carbonate.

Examples of the Y-containing compound include powders of various inorganic compounds such as oxides of Y, complex oxides of Y, hydroxide of Y, carbonate of Y, chloride of Y, sulphate of Y, nitrate of Y, and phosphate of Y. A specific example is powder of yttrium oxide.

Examples of the Zr-containing compound include powders of various inorganic compounds such as oxides of Zr, complex oxides of Zr, hydroxide of Zr, carbonate of Zr, chloride of Zr, sulphate of Zr, nitrate of Zr, and phosphate of Zr. A specific example is powder of zirconium oxide.

Notably, a method for producing the dielectric composition of the present embodiment will be described when necessary in the description of a method for producing a dielectric element and a method for producing a multilayer electronic component, which will be described later.

In the dielectric composition of the present embodiment, the relative permittivity in a high electric field (8 kV/mm) is 1,000 or more, and the ratio of decrease (the ratio of change) in the relative permittivity upon application of a DC high voltage is -35% or more, whereby the relative permittivity decrease amount is reduced.

No particular limitation is imposed on the relative permittivity of the dielectric composition of the present embodiment in a state in which no electric field is applied (0 kV/mm), as long as the object of the present invention is not impaired, but is preferably 1,300 or more.

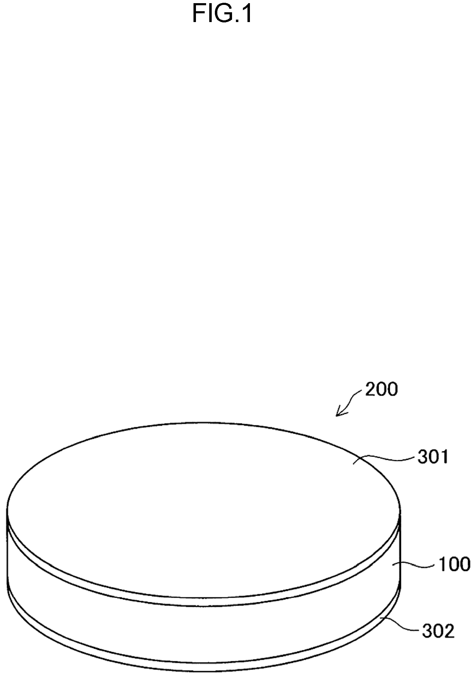

Next, a dielectric element 200 which includes a dielectric ceramic 100 formed of a dielectric composition will be described with reference to FIG. 1. FIG. 1 is a perspective view of the dielectric element 200. As shown in FIG. 1, the dielectric element 200 has a disc-like appearance and includes a disc-shaped dielectric ceramic (dielectric layer) 100 and electrodes 301 and 302 attached to the upper and lower surfaces of the dielectric ceramic 100. The dielectric ceramic 100 is formed of the above-described dielectric composition. The electrodes 301 and 302 are formed of, for example, Au.

Here, one example of the method for producing the dielectric element 200 will be described. First, as material powders, there are prepared powder of strontium carbonate, powder of sodium carbonate, powder of niobium oxide, powder of calcium carbonate, powder of yttrium oxide, and powder of zirconium oxide. These powders are weighed to obtain a target composition.

The weighed material powders with ethanol added thereto are wet-mixed in a ball mill for 15 hours or more to obtain a slurry. The obtained slurry is appropriately dried, whereby mixed powder is obtained. The obtained mixed powder is calcined at a temperature of 1,100°C to 1,300°C in an air atmosphere for 5 to 7 hours, whereby calcined powder is obtained.

The calcined powder thus obtained is mixed with a dispersant, a binder, and ethanol, and then pulverized to obtain a slurry. The slurry is dried and granulated to obtain granulates. A disc-shaped preliminary compact is obtained by compressing the obtained granulates at a pressure of 20 MPa by uniaxial pressing. Subsequently, a CIP process (cold isostatic pressing process) is performed on the disc-shaped preliminary compact at a pressure of 150 MPa, whereby a compact is obtained.

The obtained compact is held at 650°C for 4 hours so as to perform a debindering process. The compact having undergone the debindering process is fired in an air atmosphere; specifically, the compact is held at a temperature of 1,300°C to 1,350°C in an air atmosphere for 4 hours, whereby a dielectric ceramic (dielectric layer) formed of the dielectric composition is obtained. The opposite main faces (upper and lower surfaces) of the obtained dielectric ceramic are polished, and Au external electrodes are formed on the opposite main faces by sputtering, whereby the dielectric element 200 is obtained.

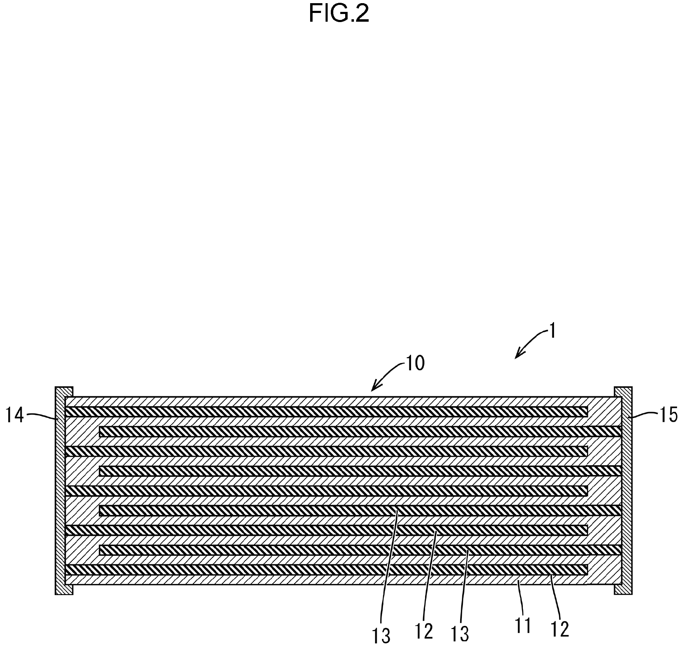

Next, a multilayer electronic component 1 including dielectric layers 11 formed of a dielectric composition will be described with reference to FIG. 2. FIG. 2 is a sectional view of the multilayer electronic component 1. The multilayer electronic component 1 is a so-called laminated ceramic capacitor. As shown in FIG. 2, the multilayer electronic component 1 includes a multilayer body 10 which includes a plurality of dielectric layers 11 formed of a dielectric composition, and first internal electrode layers (one example of internal electrode layers) 12 and second internal electrode layers (one example of internal electrode layers) 13 alternatingly stacked with the dielectric layers 11 intervening therebetween. The multilayer electronic component 1 further includes a first external electrode 14 and a second external electrode 15 which are electrically connected to the first internal electrode layers 12 and the second internal electrode layers 13, respectively, and are formed on the outer surface of the multilayer body 10. The first external electrode 14 is connected to the first internal electrode layers 12 on one side surface of the multilayer electronic component 1, and the second external electrode 15 is connected to the second internal electrode layers 13 on the other side surface of the multilayer electronic component 1.

Examples of the material of the first internal electrode layers 12 and the second internal electrode layers 13 include, for example, Cu, Ag, and Ni. Examples of the material of the first external electrode 14 and the second external electrode 15 include, for example, Au.

Here, one example of the method for producing the multilayer electronic component 1 will be described. First, as material powders, there are prepared powder of strontium carbonate, powder of sodium carbonate, powder of niobium oxide, powder of calcium carbonate, powder of yttrium oxide, and powder of zirconium oxide. These powders are weighed to obtain a target composition.

The weighed material powders with ethanol added thereto are wet-mixed in a ball mill for 15 hours or more to obtain a slurry. The obtained slurry is appropriately dried, whereby mixed powder is obtained. The obtained mixed powder is calcined at a temperature of 1,100°C to 1,300°C in an air atmosphere for 5 to 7 hours, whereby calcined powder is obtained.

The calcined powder thus obtained is mixed with a dispersant, a binder, and ethanol, and then pulverized to obtain a slurry. A plurality of ceramic green sheets are produced from this slurry by the doctor blade method.

Subsequently, by using electrically conductive paste for internal electrodes, electrode layers which become the internal electrode layers (the first internal electrode layers and the second internal electrode layers) are formed on one side of the ceramic green sheet through, for example, screen printing. The electrode layers contain a base metal as a main component; for example, contains nickel (Ni) as a main component.

Subsequently, the plurality of ceramic green sheets with the electrode layers formed thereon are stacked in such a manner that the electrode layers are alternatingly exposed from the opposite side surfaces, and ceramic green sheets with no electrode layer are stacked on the front and back surfaces of the obtained multilayer body. The obtained multilayer body is compressed, whereby a multilayer body in which the ceramic green sheets and the electrode layers are alternatingly stacked is obtained. This multilayer body is cut into a desired shape and is held at a temperature of, for example, 200°C to 400°C for 2 to 10 hours so as to perform a debindering process.

The multilayer body having undergone the debindering process is fired in an air atmosphere; specifically, the multilayer body is held at a temperature of 1,300°C to 1,350°C in an air atmosphere for 4 hours. As a result of firing, the ceramic green sheets become the dielectric layers 11, and the electrode layers become the internal electrode layers (the first internal electrode layers and the second internal electrode layers).

After appropriately polishing the side surfaces of the fired multilayer body 10 (by barrel polishing, sand blast, etc.), a pair of Au external electrodes (the first external electrode 14 and the second external electrode 15) are formed on the side surfaces of the multilayer body 10 by, for example, sputtering. In this manner, the multilayer electronic component 1 is obtained.

In the case of the dielectric composition disclosed in the present specification, the amount of decrease in relative permittivity upon application of a DC high voltage is small, and the relative permittivity in a high electric field is high. In addition, the dielectric composition has a high withstanding voltage.

The dielectric element and the multilayer electronic component each of which includes a dielectric layer formed of the above-described dielectric composition is used, for example, in the powertrain of an electric vehicle in which a high voltage (for example, 400 V to 800 V) is applied. Examples of the multilayer electronic component include dielectric capacitors, laminated ceramic capacitors, etc. In addition, the above-described dielectric composition may be used in various electronic apparatuses such as home appliances, automobile control equipment, etc.

### EXAMPLES

The present invention will now be described in more detail on the basis of examples. Notably, the present invention is not limited in any way by these examples.

### [Examples 1 to 4, Comparative Examples 1 to 4]

First, as material powders, there were prepared powder of strontium carbonate, powder of calcium carbonate, powder of sodium carbonate, powder of potassium carbonate, powder of niobium oxide, powder of yttrium oxide, and powder of zirconium oxide. From these powders, powders necessary for producing each sample were selected and weighed to obtain a target composition shown in Table 1. The weighed material powders with ethanol added thereto were wet-mixed in a ball mill for 15 hours or more to obtain a slurry. The obtained slurry was appropriately dried, whereby mixed powder was obtained. The obtained mixed powder was calcined at a temperature of 1,200°C in an air atmosphere for 6 hours, whereby calcined powder was obtained.

The calcined powder thus obtained was mixed with a dispersant, a binder, and ethanol, and then pulverized to obtain a slurry. The slurry was dried and granulated to obtain granulates. A disc-shaped preliminary compact was obtained by compressing the obtained granulates at a pressure of 20 MPa by uniaxial pressing. Subsequently, a CIP process (cold isostatic pressing process) was performed on the disc-shaped preliminary compact at a pressure of 150 MPa, whereby a compact was obtained.

The obtained compact was held at 650°C for 4 hours so as to perform a debindering process. The compact having undergone the debindering process was fired in an air atmosphere; specifically, the compact was held at a temperature of 1,300°C to 1,350°C in an air atmosphere for 4 hours, whereby a dielectric ceramic formed of the dielectric composition was obtained. The opposite main faces (upper and lower surfaces) of the obtained dielectric ceramic were polished, whereby a measurement sample having mirror-like opposite main faces was obtained.

Subsequently, for evaluation of electrical characteristics, Au external electrodes were formed on the opposite main faces of the dielectric ceramic by sputtering, whereby a dielectric element (a measurement sample for evaluation of electrical characteristics) was obtained.

### [Evaluation]

Experiments which will be described below were performed on measurement samples of Examples 1 to 4 and Comparative Examples 1 to 4.

### (Relative permittivity)

The relative permittivities (at 0 kV/mm, 8 kV/mm) of each measurement sample for evaluating electrical characteristics were respectively calculated from the value of capacitance at 1 kHz measured at room temperature by an impedance analyzer in a state in which no DC voltage was applied to the measurement sample (namely, 0 kV/mm) and the value of capacitance at 1 kHz measured at room temperature by the impedance analyzer in a state in which a DC voltage of 8 kV/mm was applied to the measurement sample. The results are shown in Table 1.

### (Decrease ratio of relative permittivity)

The ratio of decrease (ratio of change) [%] from the relative permittivity at the time when the application voltage was 0 kV/mm to the relative permittivity at the time when the application voltage was 8 kV/mm was obtained by the formula {[(relative permittivity at 8 kV/mm) - (relative permittivity at 0 kV/mm)]/(relative permittivity at 0 kV/mm)}×100. The results are shown in Table 1.

### (Synchrotron XRD)

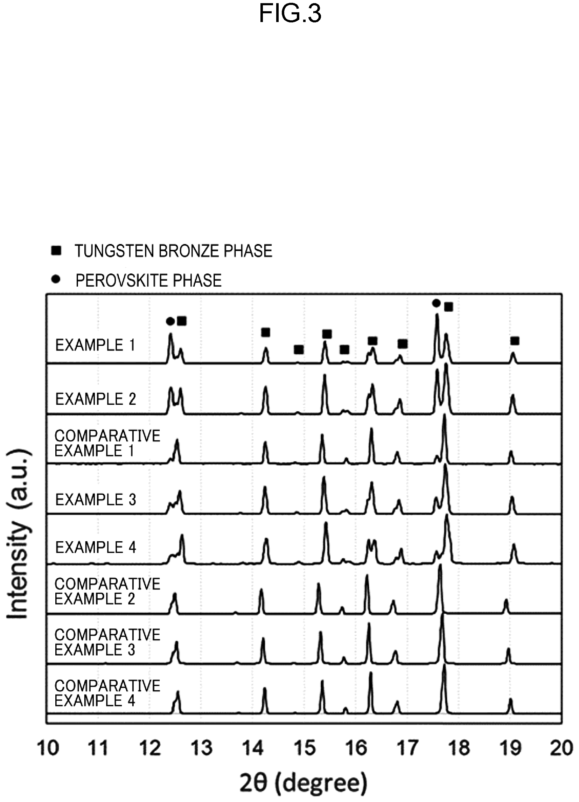

Structural analysis by synchrotron XRD (X-ray diffraction method) was performed for a polished surface of each measurement sample with no external electrode formed. The wavelength of synchrotron radiation was 0.85 angstroms. FIG. 3 shows a synchrotron XRD pattern obtained for each measurement sample. In FIG. 3, the synchrotron XRD pattern in the range of diffraction angle 2θ of 10° to 20° is shown. The horizontal axis of FIG. 3 represents diffraction angle 2θ(°) and the vertical axis of FIG. 3 represents intensity (arbitrary unit).

Notably, the background was removed from the obtained synchrotron XRD pattern by the Sonneveld-Visser method in which a peak width threshold of 0.1 and an intensity threshold of 1 were employed. Subsequently, the synchrotron XRD pattern was normalized by regarding the peak intensity of a peak (maximum peak) whose intensity was the highest as 1. As shown in FIG. 3, in all the measurement samples, the peak (maximum peak) whose intensity was the highest appeared in the range of diffraction angle 20 of 17° to 18°. Notably, the maximum peak used herein was selected from the peaks of the synchrotron XRD pattern attributable to the Sr₂NaNb₅O₁₅-based oxide having a tungsten bronze-type structure.

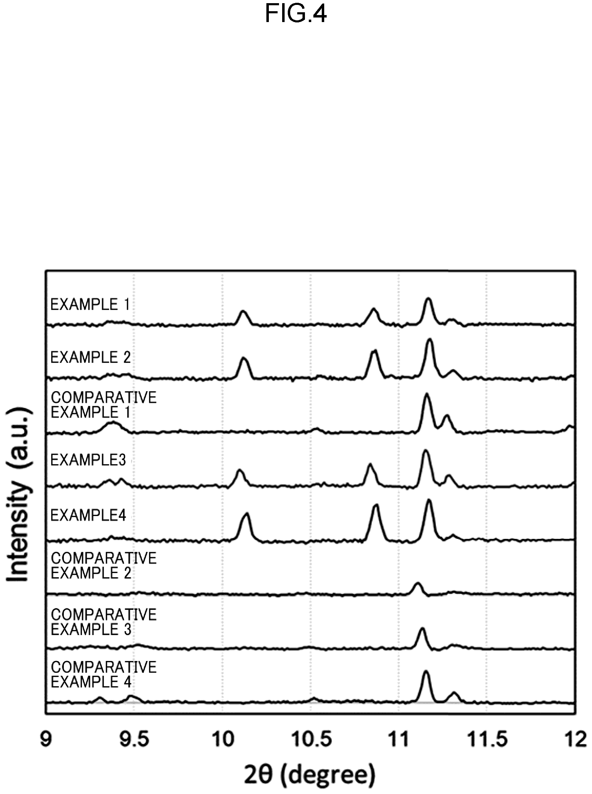

FIG. 4 shows the synchrotron XRD pattern of each measurement sample in the range of diffraction angle 2θ of 9° to 12°. The horizontal axis of FIG. 4 represents diffraction angle 2θ(°) and the vertical axis of FIG. 4 represents intensity (arbitrary unit).

### (Peak intensity ratio)

In the case where, in the synchrotron XRD pattern of each measurement sample, a peak top (local maximum value) was present in the range of diffraction angle 20 of 10.7° to 11.0°, the ratio (peak intensity ratio) of the intensity of the peak having the above-mentioned peak top to the intensity of the maximum peak was obtained. The results are shown in FIG. 1. Notably, the peak intensity ratio used therein was obtained from the peaks of the synchrotron XRD pattern attributable to the Sr₂NaNb₅O₁₅-based oxide having a tungsten bronze-type structure.

**[Table 1]**

| | Sr_{2.5-0.5x-a-b}CaₐY_{b}NaₓK_{y}Nb_{5-c}Zr_{c}O₁₅ | | | | | | | PEAK INTENSITY RATIO | RELATIVE PERMITTIVITY (0kV/mm) | RELATIVE PERMITTIVITY (8kV/mm) | RELATIVE PERMITTIVITY DECREASE RATIO (%) |
|---|---|---|---|---|---|---|---|---|---|---|---|
| | Sr | Ca | Y | Na | K | Nb | Z r | | | | |
| | 2.5-0.5x-a-b | a | b | X | y | 5-c | c | | | | |
| EXAMPLE 1 | 1.65 | 0.05 | 0.05 | 1.5 | 0 | 4.95 | 0.05 | 0.0051 | 1503 | 1051 | -30.1 |
| EXAMPLE 2 | 1.775 | 0.05 | 0.05 | 1.25 | 0 | 4.95 | 0.05 | 0.0053 | 1634 | 1166 | -28.6 |
| COMPARATIVE EXAMPLE 1 | 2.0 | 0 | 0 | 1 | 0 | 5 | 0 | - | 2192 | 1006 | -54.1 |
| EXAMPLE 3 | 1.9 | 0.05 | 0.05 | 1 | 0 | 4.95 | 0.05 | 0.0043 | 1926 | 1263 | -34.4 |
| EXAMPLE 4 | 1.8 | 0.1 | 0.10 | 1 | 0 | 4.9 | 0.1 | 0.0067 | 1309 | 1192 | -8.9 |
| COMPARATIVE EXAMPLE 2 | 1.9 | 0.05 | 0.05 | 0.25 | 0.75 | 4.95 | 0.05 | - | 2095 | 1037 | -50.5 |
| COMPARATIVE EXAMPLE 3 | 1.9 | 0.05 | 0.05 | 0.5 | 0.5 | 4.95 | 0.05 | - | 2372 | 1165 | -50.9 |
| COMPARATIVE EXAMPLE 4 | 1.9 | 0.05 | 0.05 | 0.75 | 0.25 | 4.95 | 0.05 | - | 2352 | 1141 | -51.5 |

It was confirmed from the results of the analysis by the synchrotron XRD (see FIGS. 3 and 4) that each of the dielectric compositions of Examples 1 to 4 has a crystal phase including an Sr₂NaNb₅O₁₅-based oxide having a tungsten bronze-type structure.

Each of the dielectric compositions of Examples 1 to 4 had a peak top of the synchrotron XRD pattern in the range of diffraction angle 2θ of 10.7° to 11.0° and had a peak intensity ratio of 0.0043 or more. As described above, the peak intensity ratio is the ratio of the intensity of a peak having the above-mentioned peak top to the intensity of the maximum peak having the maximum intensity among the peaks in the synchrotron XRD pattern attributable to the Sr₂NaNb₅O₁₅-based oxide. As shown in FIG. 3, in all the measurement samples, the peak (maximum peak) whose intensity was the highest appeared in the range of diffraction angle 2θ of 17° to 18° in the synchrotron XRD pattern attributable to the Sr₂NaNb₅O₁₅-based oxide. In the case of such dielectric compositions of Examples 1 to 4, the relative permittivity in a high electric field (8 kV/mm) was 1,000 or more, and the ratio of decrease (ratio of change) in the relative permittivity upon application of a DC high voltage was -35% or higher, whereby the amount of decrease in the relative permittivity was reduced.

Notably, it was confirmed from the results of the analysis by the synchrotron XRD (see FIGS. 3 and 4) that each of the dielectric compositions of Examples 1 to 4 also has a crystal phase having a perovskite-type crystal structure.

In the case of the dielectric compositions of Comparative Examples 1 to 4, as shown in FIG. 4, no peak top appeared in the range of diffraction angle 2θ of 10.7° to 11.0°. In the case of the dielectric compositions of Comparative Examples 1 to 4, the ratio of decrease (ratio of change) in the relative permittivity ranged between -54.1% to -50.5%, and the amount of decrease in the relative permittivity was larger.

The dielectric composition of Comparative Example 1 has a crystal phase having a tungsten bronze-type structure in which the octahedral structure has no tilt. Notably, in the dielectric composition of Comparative Example 1, a crystal phase having a perovskite-type crystal structure is also contained. In addition, it was confirmed that, as shown in FIGS. 3 and 4, each of the dielectric compositions of Comparative Examples 2 to 4 is composed of only the main phase (the crystal phase having a tungsten bronze-type structure) and has no secondary phase. It is assumed that, in the case of Comparative Examples 2 to 4, since substitution by K does not cause tilting of the octahedral structure, there was obtained a result showing that no peak appeared in the range of 10.7° to 11.0°.

### DESCRIPTION OF REFERENCE NUMERALS

100: dielectric ceramic (dielectric layer), 200: dielectric element, 301, 302: electrode, 1: multilayer electronic component, 10: multilayer body, 11: dielectric layer, 12: first internal electrode layer (internal electrode layer), 13: second internal electrode layer (internal electrode layer), 14: first external electrode, 15: second external electrode

## Claims

1. A dielectric composition including a crystal phase including an Sr₂NaNb₅O₁₅-based oxide having a tungsten bronze-type structure,
wherein the Sr₂NaNb₅O₁₅-based oxide has a crystal structure **characterized in that**, in a synchrotron XRD pattern obtained through analysis of the Sr₂NaNb₅O₁₅-based oxide by synchrotron XRD at a measurement wavelength of 0.85 angstroms, a peak top of the synchrotron XRD pattern appears in a range of diffraction angle 2θ of 10.7° to 11.0°, and a peak intensity ratio is 0.0043 or more, the peak intensity ratio being the ratio of an intensity of a peak having the peak top to an intensity of a maximum peak having the maximum intensity among peaks in the synchrotron XRD pattern attributable to the Sr₂NaNb₅O₁₅-based oxide.

2. The dielectric composition according to claim 1, wherein the Sr₂NaNb₅O₁₅-based oxide contains Ca, Y, and Zr.

3. A dielectric element comprising:
a dielectric ceramic formed of the dielectric composition recited in claim 1 or 2; and
electrodes attached to the dielectric ceramic.

4. A multilayer electronic component comprising a multilayer body in which dielectric layers formed of the dielectric composition recited in claim 1 or 2 and internal electrode layers are alternatingly stacked.
